# EUROPEAN PATENT APPLICATION

(11) **EP 1 734 509 A1**
(43) Date of publication of application: **20.12.2006**
(21) Application number: 05013168.9
(22) Date of filing: 17.06.2005
(51) Int. Cl.: G10L 15/08

(54) **Method and system for speech recognition**

(71) Applicant: Harman Becker Automotive Systems GmbH, 76307 Karlsbad (DE)
(72) Inventor: Schless, Volker, 89134 Blaustein (DE)
(74) Representative: Grünecker, Kinkeldey, Stockmair & Schwanhäusser Anwaltssozietät

(57) **Abstract**

The invention relates to a method and a system for speech recognition, comprising database comprising at least one lexical list, interface configured to detect at least one speech signal, processing means configured to digitize the detected at least one speech signal, recognizing means configured to generate a least two string hypotheses corresponding to the at least one speech signal and assigning a score to each string hypothesis and comparing and assigning means configured to compare at least one of the string hypotheses with at least one entry in the at least one lexical list based on the score of the at least one of the string hypotheses and to assign at least one of the string hypotheses to at least one entry in the at least one lexical list based on the comparing of at least one of the string hypotheses with at least one entry in at least one lexical list and based on the score of the at least one of the string hypotheses.

## Description

### Field of Invention

The present invention relates to a method and a system for speech recognition. In particular, it relates to a method that allows to recognizing efficiently entries in long lists and a system that makes use of this method.

### Prior Art

Speech recognition systems, i.e. apparatus for converting an acoustic signal to a sequence of words or strings, become increasingly prevalent nowadays. In the last years due to dramatic improvement in speech recognition technology, high performance speech analyzing, recognition algorithms and speech dialog systems have been made available. Present day speech input capabilities comprise voice dialing, call routing, document preparation, etc. A speech dialog system can, e.g., be employed in a car to allow the user to control different devices such as a mobile phone, a car radio, a navigation system and/or an air condition.

During speech recognition verbal utterances, either isolated words or continuous speech, are captured by a microphone or a telephone, for example, and converted to analogue electronic signals that subsequently are digitalized. The digital signals are usually subject to a subsequent spectral analysis. Recent representations of the speech waveforms sampled typically at a rate between 6.6 kHz and 20 kHz are derived from the short term power spectra and represent a sequence of characterizing vectors containing values of what is generally referred to as features/feature parameters. The values of the feature parameters are used in succeeding stages in the estimation of the probability that the portion of the analyzed waveform corresponds to, for example, a particular entry, i.e. a word, in a vocabulary list.

Some speech recognition system require speaker enrollment, i.e. a user must provide samples of his or her speech. Other systems can be used in a speaker independent way.

The recognized words can be the final results, as for applications such as commands or data entry, or can serve as an input to further linguistic processing. For the sake of simplicity and as common in the business of speech recognition, by words herein are meant linguistic words but also subunits of words as syllables and phonemes or allophones, i.e. context dependent phonemes. Any sequence of any kind of words may be termed a sentence. In the following, however, the term 'sentence' is exclusively used for a sequence of linguistic words.

Speech recognition systems usually make use of a concatenation of allophones that constitute a linguistic word. The allophones are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

Speech recognizing systems choose the guess for an orthographic representation of a spoken word or sentence that corresponds to sampled acoustic signals from a finite vocabulary of words that can be recognized and are stored, for example, as data lists. In the art comparison of words recognized by the recognizer and words of a lexical list usually only take into account the probability of mistaking one word, e.g. a phoneme, for another.

Such above-mentioned lists become readily very long for practical applications, for example, if a speech recognizer is used to access an entry of a telephone directory of a mobile phone and initiate calling only via speech commands. Another example is the verbal control of a vehicle navigation system. In these cases, conventional search processes can take an unacceptable long time.

Moreover, both the user and the recognizing systems are not expected to act faultlessly. Recognition is generally more difficult when lexical lists are long and/or have many similar-sounding words (homophones). Thus, some error tolerance and confidence measure must be employed in the speech recognition system.

Many speech recognition systems evaluate the hypothesized correspondents to uttered words or sentences for the purpose of rank ordering them and creating N-best lists (see, for example, US 6,571,210).

While such kinds of evaluative comparison of the processed input and the entries of a list result in a ranking from the most probable to the least probable candidate word, some indication of whether a hypothesis is correct or not is not provided by the same token. In addition, in the context of conventional methods that make use of some kind of confidence measures, the utterance of some out-of-vocabulary word could erroneously result in mapping a word from the list onto the unknown word.

Given the above-mentioned drawbacks of the state of the art there is a need for an improved method and system for recognition of entries in long lists that allow for a reliable and fast matching of entries in lists. Moreover, there is a need for a method for recognizing entries in long lists that works effectively, even if relatively limited computer resources, as it is the case in embedded systems, are available.

### Description of the invention

This above-mentioned problem is solved by the method according to claim 1 and the speech recognition system according to claim 11.

The present invention provides a method for speech recognition according to claim 1 comprising the steps of
providing a database comprising at least one lexical list;
detecting and digitizing at least one speech signal;
generating at least two string hypotheses corresponding to the at least one speech signal;
assigning a score to each of the at least two string hypotheses; and
comparing at least one of the string hypotheses with at least one entry in the at least one lexical list based on the score of each string hypothesis.

The speech signals may comprise at least one word, in particular, at least one phoneme. In general, by words herein are meant linguistic words or subunits thereof, as characters, consonants, vowels, phonemes, or allophones. The inventive method can be used in speech recognition that operates on the base of isolated words or on the base of continuous speech.

Detected speech waveforms are sampled and processed to generate a representation of the speech signals. The representation of the speech signals may comprise a sequence of characteristic or feature vectors containing feature parameters providing information on, e.g., the frequencies and amplitudes of signals that help to discriminate, e.g., between different phonemes. The step of digitizing the speech signals may comprise dividing the speech signals into frames. For each frame, at least one characterizing vector can be determined.

A sequence of string hypotheses, e.g., based on characterizing vectors representing the received and digitized speech signals, is generated corresponding to at least one speech signal. Typically, this recognizing step results in a set of alternative suggestions, i.e. string hypotheses, for a string representation of a spoken word or a sentence. By the term 'sentence' herein is meant a sequence of linguistic words. The probability to correctly identify the verbal utterance usually differs between the several hypotheses.

The individual string hypotheses are assigned with scores during the recognizing operation. This means that they are evaluated by some measure according to one or more predetermined criteria with respect to the probability that the hypotheses represent the verbal utterance. The several generated string hypotheses may constitute an ordered set or sequence according to a confidence measure of the individual hypotheses. For example, the string hypotheses may constitute an N-best list as known in the art.

It is noted that on the one hand individual phonemes or characters can be scored. On the other hand, entire linguistic word hypotheses consisting of characters may be scored.

The scoring of these linguistic words may or may not be based on scores of the characters and phonemes or allophones that constitute the word.

In order to relate one of the hypotheses to the corresponding entry in a lexicon according to the present invention, comparison between the scored string hypotheses and the entries in the lexicon is performed on the base of the scores. The scoring can be performed, e.g., on the grounds of acoustic features of phonemes, Hidden Markov model probabilities or grammar models (see below). The comparison, however, does not necessarily exclusively depend on the scores.

Consider a case in which the recognizing step for identifying the verbal utterance of a consonant is performed almost without any ambiguities. The recognizing result for this consonant, say "s", is highly reliable in terms of the employed scoring method. Contrary, a different generated hypothesis, say "m", exhibits a poor scoring. In order to facilitate and improve the comparison between the recognizing results and the entries in the lexicon according to the inventive method any comparison between the hypothesis "m" and the vocabulary may be omitted. If a linguistic word is to be identified, words with a leading "s" may preferably be compared to the string hypothesis. Consequently, entries in long lists can be compared to a string hypothesis very effectively, even if relatively limited computer resources, as it is the case in embedded systems, are available.

If all string hypotheses have scores below a predetermined limit, it might be advantageous to not initiate any comparison at all, but to prompt, e.g., a demand to the human user to repeat his utterance. Such a procedure efficiently helps to save time and increases general acceptance of the user.

Thus, it is provided a method for speech recognition as described above but only comparing at least one string hypothesis of the sequence of string hypotheses with at least one entry in at least one lexical list based on the score of the at least one string hypothesis, if at least one of the string hypotheses has a score above a predetermined value, i.e. is better than some predetermined level. The predetermined level can be a measure for a specific reliability of the recognizing result. More generally, comparing may be performed only, if some particular condition is fulfilled.

Moreover, it is provided one of the above described methods further comprising the steps of assigning at least one of the string hypotheses to at least one entry in the at least one lexical list to obtain at least one data representation of the detected at least one speech signal, wherein the assigning is based on the comparing of the at least one of the string hypotheses with the at least one entry in the at least one lexical list, and the score of the at least one of the string hypotheses.

The entries of the lexical list are compared with the sequence of string hypotheses to find the entry that most probable corresponds to the verbal utterance of a speaker. The assigning of a string hypothesis to an entry of the lexical list, which means that an entry of the list is identified that most probably corresponds to the speech signal, is advantageously based on the scores of the recognized string hypotheses.

If, e.g., the score of a consonant, say "s" is very high, i.e. the recognizing result can be regarded as being rather reliable, assignment to an "s" as an entry in the lexicon should be preferred over an assignment to a different consonant that would otherwise would have a good chance to be assigned, as, e.g. an "f", since it is rather similar in some, e.g. acoustical, respects.

The feature of assigning a word hypothesis to an entry in a lexical list, i.e. relating uniquely the word hypothesis and the entry to each other, based on the score of the hypothesis significantly enhances the probability to identify the right string representation for the uttered speech signal. A method for speech recognition employing the abode discussed kinds of comparing and assigning, consequently, becomes more reliable and profitable than methods in the art. In particular, entries in long lists can be correctly identified even if only limited computer resources are available.

The scores can, e.g., be determined on the base of an acoustic model probability and/or a Hidden Markov Model and/or a grammar model probability and or a combination thereof.

In the simplest case, acoustic features of phonemes can be used to determine the score. For example, an "s" usually has a temporal duration of more than 50 ms and exhibits mainly frequencies above some 44 kHz. Knowledge of this kind can be used to derive rules for statistical classification methods.

The score may represent distance measures indicating how far from or close to a specified phoneme a generated characterizing vector and thereby the associated word hypothesis is. In recognizing sentences grammar models including syntactic and semantic information may be used in order to score individual string hypotheses representing, in particular, linguistic words.

Hidden Markov Models (HMM) represent one of the dominant recognition paradigms with respect to phonemes. An HMM is a double stochastic model according to which the generation of underlying phoneme strings and the surface acoustic representations are both represented probabilistically as Markov processes. The hidden Markov chain accounts for temporal and spectral variability. In addition, neural networks can be used to estimate the frame-based scores that subsequently may be integrated into HMM-solutions forming so-called hybrid systems.

According to an embodiment of the herein disclosed method for speech recognition the assigning may also be based on a predetermined probability of mistaking at least one of the generated string hypothesis with another string hypothesis. Utilization of two different criteria, i.e. the score and the probability of mistaking one hypothesis with another, may further improve the reliability method for speech recognition. The probability of mistaking, e.g., an "F" for an "N" is know a priori or can be determined by test runs.

The assigning may be performed giving priority to the score rather than the probability of mistaking the at least one string hypothesis with another string hypothesis or vice versa. Usually, the former case will be preferred, since the score in many practical applications might be the most important criterion for a successful assigning of a word hypothesis to the corresponding entry in a lexical list.

The comparing and/or assigning can also be performed based on a substring of the entire at least one of the string hypotheses. A conformity by parts of a word hypothesis and an entry in a pre-stored list may be sufficient for finding rather quickly a correct data representation of the detected speech signals.

According to one embodiment the step of digitizing the detected at least one speech signal may comprise dividing the at least one speech signal into frames and determining for each frame at least one characterizing vector.

Characterizing vectors can comprise the spectral content of the speech signals. The spectrum of a speech signal is particularly adequate for the further analysis. In particular, the characterizing vectors can be cepstral vectors. The cepstrum separates the glottal frequency from the vocal tract resonance. The cepstrum is obtained in two steps. A logarithmic power spectrum is calculated and on that an inverse Fourier transform is performed.

The characterizing vectors may be derived from a short-term power spectrum. Usually the speech signal is divided into frames of some 10 to 20 ms duration. The feature parameters may comprise the power of some 20 discrete frequencies that are of relevance for the identification of the string representation of a spoken speech signal.

Further, it is provided a computer program product, comprising one or more computer readable media having computer-executable instructions for performing the steps of the methods described above.

The present invention also provides a system for speech recognition, comprising
a database comprising at least one lexical list;
an interface configured to detect at least one speech signal;
processing means configured to digitize the detected at least one speech signal;
recognizing means configured to generate a least two string hypotheses corresponding to the at least one speech signal and assigning a score to each of the at least two string hypotheses; and
comparing and assigning means configured to compare at least one of the string hypotheses with at least one entry in the at least one lexical list based on the score of the at least one of the string hypotheses and to assign at least one of the string hypotheses to at least one entry in the at least one lexical list based on the comparing of at least one of the string hypotheses with at least one entry in at least one lexical list and based on the score of the at least one of the string hypotheses.
The comparing and assigning means may be configured to perform comparison and/or assigning only, if a particular condition is fulfilled, in particular, if at least one of the string hypotheses has a score above a predetermined value.

It may be preferred that the comparing and assigning means is configured to also assign the at least one of the string hypotheses to at least one entry in the at least one lexical list based on a predetermined probability of mistaking the at least one of the string hypotheses with another string hypothesis.

The comparing and assigning means can also be configured to give priority to the score rather than the probability of mistaking the at least one of the string hypotheses with another string hypothesis.

Furthermore, the comparing and assigning means can be configured to perform comparing and assigning based on a substring of the at least one of the string hypotheses.

The recognizing means may be configured to determine scores for the string hypotheses on the base of an acoustic model probability and/or a Hidden Markov Model and/or a grammar model probability and or a combination thereof.

The processing means may be configured to determine a sequence of characterizing vectors comprising the spectral content of the detected at least one speech signal and/or to determine at least one cepstral vectors.

Moreover, a navigation system comprising one of the above described systems and the use of one of the above-described embodiments for the system for speech recognition in a vehicle navigation system are provided. The disclosed embodiments are particularly useful in vehicle navigations systems, since they provide a reliable solution to control the navigation systems in a hands-free way.

Additional features and advantages of the invention will be described with reference to the drawings. In the description, reference is made to the accompanying figures that are meant to illustrate preferred embodiments of the invention. It is understood that such embodiments do not represent the full scope of the invention that is defined by the claims given below.

Figure 1 shows principal steps according to an embodiment of the disclosed method for speech recognition comprising signal processing, speech recognizing and generating of a list of string hypotheses as well as assigning a final data representation to detected speech signals.

Figure 2 illustrates principal steps of an embodiment of the method for recognizing entries in long lists comprising the steps of speech recognizing, listing and scoring as well as comparing of word hypotheses with entries in a vocabulary and assigning word hypotheses to particular entries.

Figure 3 illustrates an embodiment of the provided system for speech recognition employed in a vehicle navigation system.

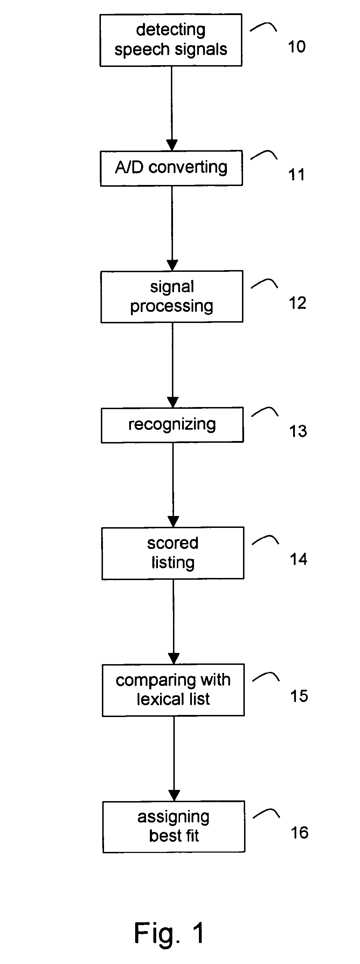

Figure 1 illustrates an embodiment of the inventive method for speech recognition. First, speech signals are detected 10. The verbal utterance sensed by a microphone or an array of microphones is converted to analogue electrical signals and subsequently digitized by A/D conversion 11. The digitized signals are used for further signal processing 12.

Advantageously, the digitized speech signals can be pulse code modulated, i.e. they are transformed into sets or frames of useful measurements or features at a fixed rate, typically once every 10 - 20 ms. Typical frames may include, e.g., 300 samples of 20 ms duration each. In principle, these measurements can then be used to search for the most likely word candidate, making use of constraints imposed by, e.g., acoustic, lexical, and language models.

The speech waveform may be sampled at a rate between 6.6 kHz and 20 kHz and processed to produce a new representation as a sequence of characterizing or feature vectors containing values of what are generally called features /feature parameters. The vectors typically comprise between 10 and 20 feature parameters and are computed for every frame. These feature parameter values, e.g. the energy in different frequency ranges, are then used in succeeding stages for the estimation of the probability that the portion of waveform analyzed corresponds to a particular detected phonetic event.

One common kind of such characterizing vectors are cepstral vectors. Thus, the signal processing 12 may comprise cepstral encoding, i.e. an inverse Fourier transform of the logarithm of the Fourier transformed detected speech signals being digitized by the A/D conversion 11. It is to be understood that different encoding techniques, i.e. different representations of the speech signals as known from the art may also be employed.

The next step of the speech recognition process according to the present example is to perform an N-best search based on the cepstral vectors. Different models known from the art may be used for generating the N-best list of string hypotheses corresponding to the detected speech signals. Advantageously, a hidden Markov model (HMM) is employed. An HMM is a doubly stochastic model, in which the generation of the underlying phoneme string and the frame-by-frame surface acoustic realizations are both represented probabilistically as Markov processes.

An interesting feature of frame-based HMM systems is that speech segments are identified during the search process, rather than explicitly. An alternate approach is to first identify speech segments, then classify the segments and use the segment scores to recognize words. This approach has produced competitive recognition performance in several tasks.

In general, it may be desirable to employ text-independent recognition methods based on vector quantization (VQ). In this method, VQ codebooks consisting of a small number of representative feature vectors are used as an efficient means of characterizing speaker-specific features. A speaker-specific codebook is generated by clustering the training feature vectors of each speaker. In the recognition stage, an input utterance is vector-quantized using the codebook of each reference speaker and the VQ distortion accumulated over the entire input utterance is used to make the recognition decision.
In the training phase, reference templates are generated and identification thresholds are computed for different phonetic category. In the identification phase, after the phonetic categorization, a comparison with the reference template for different categories provides a score for each category. The final score is a weighted linear combination of the scores from each category.

According to the present invention it is of importance to score hypotheses for the purpose of rank ordering them 14. The scores do not necessarily provide a good indication of whether a hypothesis is correct or not, just that it is better than the other hypotheses. However, results of test runs may allow for an absolute estimate of the probability of a correct hypothesis encoded by the score.

The recognizing process 13 of the cepstral vectors provides a scored listing of word or string hypotheses 14. Each recognized word, e.g., a phoneme or a letter, is evaluated or scored by, e.g., providing a value of probability or some distance measure to each word. Scores can be encoded by, e.g., characters or numbers. If, e.g., a speech signal is recognized as an "F" with a high probability, the score for say an "S" is worse than in a case in which the recognition of "F" has been carried out with a lower reliability at step 13.

Based on the scored entries of the list of word hypotheses 14 generated during the recognizing process 13, comparison with the entries of a lexicon or a lexical list is performed 15. The comparison may only be performed for the recognized word hypothesis with the best score. Advantageously, comparison can be carried out for each element of the scored list in order to improve the probability that the utterance is recognized correctly.

After the step of comparison, the respective element of the scored listing generated in step 14 is assigned 16 to the entry of the lexical list that most probably represents the utterance, i.e. the detected speech signals. Word hypotheses with a high score are more probably assigned to the respective entry of the lexicon than hypotheses with a low score.

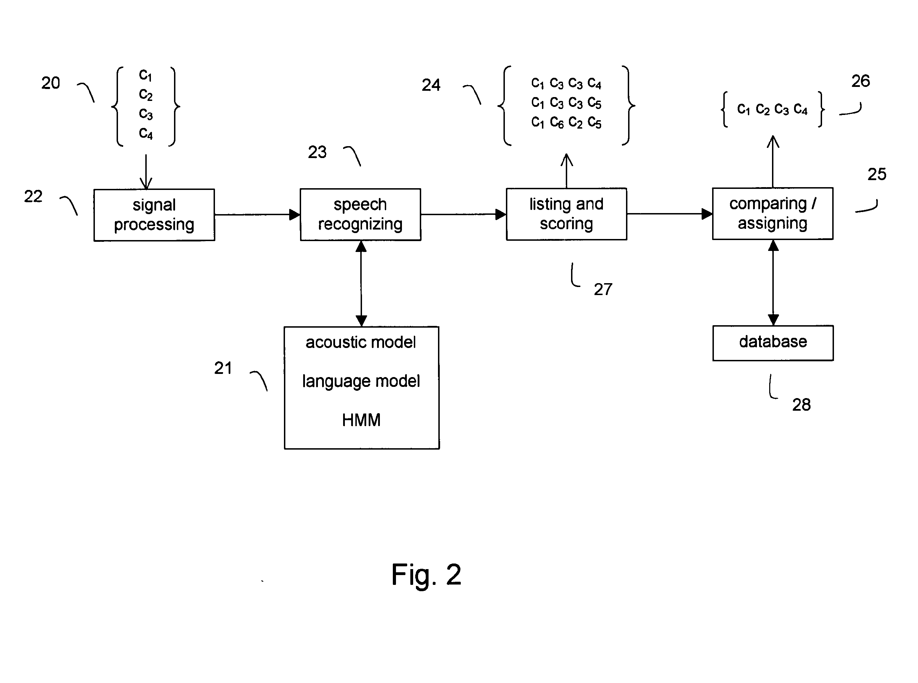

Recognizing entries in lists according to an embodiment of the inventive method is illustrated in Figure 2. A speaker, possibly an enrolled speaker, performs a verbal utterance, i.e. he transmits speech signals. In this example, he utters 20 four different characters or phonemes c₁, c₂, c₃ and c₄ that may constitute a particular linguistic word. The speech signals are detected, digitized and processed 22 to generate a sequence of characterizing vectors comprising a number of feature parameters as frequencies, amplitudes an energy levels per frequency range.

For the characterizing vectors the recognizing operation is performed 23 employing a Hidden Markov Model (HMM) that uses an acoustic model and a language model 21. According to the acoustic model a sequence of acoustic parameters are seen as a concatenation of elementary processes described by HMM. The probability of a sequence of words, e.g. phonemes, is computed by a language model.

Different text-dependent methods may be used in addition. Such methods are usually based on template-matching techniques. In this approach, the input utterance is represented by a sequence of characterizing or feature vectors, generally, short-term spectral feature vectors. The time axes of the input utterance and each reference template or reference model of the registered speakers are aligned using a dynamic time warping (DTW) algorithm and the degree of similarity between them, accumulated from the beginning to the end of the utterance, is calculated.

Since an HMM can efficiently model statistical variations in spectral features, HMM-based methods can be used as extensions of the DTW-based methods, and usually will achieve significantly better recognition accuracies.

A set of recognizing results, i.e. string hypotheses, is generated wherein the hypotheses are listed and scored 27 according to the results of the employed HMM. In the present example, three word hypotheses, comprising four hypotheses for characters or phonemes each, are found 24 as possible data representations of the input speech signals comprising the characters or phonemes c₁, c₂, c₃ and c₄. The c₁ is recognized with a high score, i.e. the recognizing result is rather reliable. This fact is taken into account when comparing the hypotheses with the entries in a database 28 comprising a lexical list and assigning a hypothesis to an entry in the database, be it a hypothesis for an individual character or for the word consisting of four characters according to this example.

The second character c₂ is recognized as c₃ with a high score and as c₆ with a lower score. The third character is correctly identified as c₃ with a high score and as c₂ with a lower score. The fourth character is correctly identified as c₄ with a high score and as c₅ with a lower score. The list 24 may be understood as a rank ordered list for the words consisting of four characters each. The rank ordering may also be restricted to the recognition of the individual characters.

The entries of the list 24, i.e. the word hypotheses, are compared 25 with entries in a database 28 that comprises a lexicon. The lexicon may include individual characters and phonemes and/or linguistic words. Either each hypothesis for a character is assigned 25 to a character in the lexicon 28, or the string hypothesis consisting of the four characters is assigned to a four-character entry, e.g., a linguistic word consisting of four characters, in the lexicon. If no word consisting of c₁, c₃, c₃ and c₄ or c₁, c₃, c₃ and c₅ or c₁, c₆, c₂ and c₅ is present in the lexicon but one entry is given by c₁, c₂, c₃ and c₄, according to an embodiment or the present inventive method it is possible to assign the correct sequence c₁, c₂, c₃ and c₄ to the linguistic word hypothesis c₁, c₃, c₃ and c₄. As a result a data representation 26 is obtained that, according to this example, represents a correct identification of the verbal utterance 20.

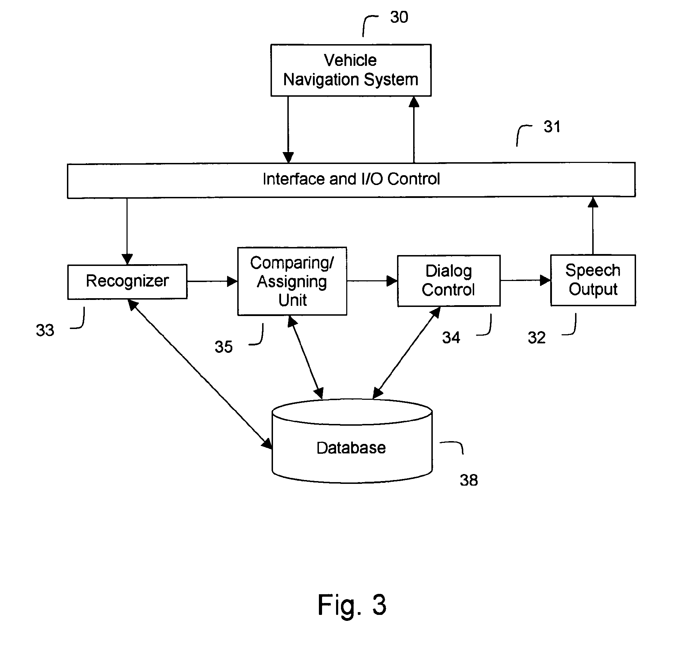

Figure 3 illustrates an embodiment of the inventive speech recognition system incorporated in a vehicle navigation system 30. Other envisioned applications include an embedded telephone system with an automatic directory assistance system that determines the telephone corresponding to a respective verbal utterance and automatic telephone information services as for train and flight schedules etc.

Some interface and I/O control unit 31 is mandatory to control the vehicle navigation system 30 by speech and to receive verbal navigation information. The unit 31 comprises at least one microphone and desirably some pre-processing means for pre-processing the detected speech signals. A user, i.e. a driver of the vehicle, can ask the navigation system to show him the route to a destination, e.g., a city, by speaking the name of the city, e.g., "Stuttgart", in Baden-Württemberg, Germany. The speech signals representing "Stuttgart" are detected and subsequently processed as described above.

A recognizer 33 is supported by a database 38. If the speaker has trained the system for speech recognition, in addition to controlling the navigation system by speech, identification of the driver can be performed.

The recognizer 33 provides scored string hypotheses. These hypotheses are transmitted to a comparing and assigning unit 35. For example, a set of three string hypotheses, namely, "Frukfart", "Dortmart" and "Sdotdhord", may be transmitted to the unit 35. Each of the hypothesized characters is scored. In this example the first character "S" may be regarded as being recognized with a high reliability denoted by a high score.

The comparing and assigning unit 35 compares the three string hypotheses with entries of a lexical list stored in the database 38. Since "S" is denoted with a high score, comparison takes into account that there is a high probability that the target word starts with an "S". If the score was low, the comparison would check, in particular, for words starting with an "F", since it is known that the recognizer might mistake an "F" for an "S" with a predetermined relatively high probability. According to the inventive method the information that the recognizing result is highly reliable influences the speech recognition process.

In the present example the name of the city "Frankfurt", thus, is not regarded as the target word by the comparing and assigning unit 35. Rather the correct word "Stuttgart" will be assigned to the most reliable string hypotheses. It is noted that for a successful comparison not necessarily the complete string hypothesis must be considered, but it may be preferred to configure the system to perform a comparison based on a substring. Comparison based on a substring may be performed exclusively, altematively or additionally to comparison on the base of the entire word hypothesis.

According to the output of the unit 35, i.e. according to the data representation that most probably corresponds to the driver's utterance, the dialog control 34 might initiate the further proceeding by prompting a request for confirmation, like "Destination is Stuttgart?", via the speech output 32. The dialogue control controls the speech output by making use of the database 38 that provides the phonetic information about the word(s) and/or sentence(s) to be output to a user. The adequate word(s) and/or sentence(s) depend on the input speech signal provided in a processed form to the recognizer 33. According to the present example the navigation system, after confirmation by the driver, may give navigation instructions by voice to guide the driver to the destination "Stuttgart".

Thus, the generic problem of speech recognition and speech control one faces in the context of a vehicle navigation system that is configured to be operated by voice is efficiently solved by the described embodiment of the system for speech recognition.

All previously discussed embodiments are not intended as limitations but serve as examples illustrating features and advantages of the invention. It is to be understood that some or all of the above described features can also be combined in different ways.

## Claims

1. Method for speech recognition, comprising
providing a database comprising at least one lexical list;
detecting and digitizing at least one speech signal;
generating at least two string hypotheses corresponding to the at least one speech signal;
assigning a score to each of the at least two string hypotheses; and
comparing at least one of the string hypotheses with at least one entry in the at least one lexical list based on the score of each string hypothesis.

2. Method according to claim 1, wherein the step of comparing is performed only, if a particular condition is fulfilled, in particular, if at least one of the string hypotheses has a score above a predetermined value.

3. Method according to claim 1 or 2, further comprising
assigning at least one of the string hypotheses to at least one entry in the at least one lexical list to obtain at least one data representation of the at least one detected speech signal, wherein the assigning is based on
the comparing of the at least one of the string hypotheses with the at least one entry in the at least one lexical list, and
the score of the at least one of the string hypotheses.

4. Method according to claim 3, wherein the assigning is also based on a predetermined probability of mistaking the at least one of the string hypotheses with another string hypothesis.

5. Method according to claim 4, wherein the assigning is performed giving priority to the score rather than the probability of mistaking the at least one of the string hypotheses with another string hypothesis.

6. Method according to one of the claims 3 - 5, wherein the comparing and/or assigning is performed based on a substring of the at least one of the string hypotheses.

7. Method according to one of the preceding claims, wherein the scores are determined on the base of an acoustic model probability and/or a Hidden Markov Model and/or a grammar model probability and or a combination thereof.

8. Method according to one of the preceding claims, wherein the step of digitizing the at least one speech signal comprises dividing the speech signal into frames and determining for each frame at least one characterizing vector.

9. Method according to one of the preceding claims, wherein the at least one characterizing vector comprises the spectral content of the at least one speech signal and/or is a cepstral vector.

10. Computer program product, comprising one or more computer readable media having computer-executable instructions for performing the steps of the method according to one of the Claims 1 - 9.

11. System for speech recognition, comprising
a database comprising at least one lexical list;
an interface configured to detect at least one speech signal;
processing means configured to digitize the detected at least one speech signal;
recognizing means configured to generate a least two string hypotheses corresponding to the at least one speech signal and assigning a score to each of the at least two string hypotheses; and
comparing and assigning means configured to compare at least one of the string hypotheses with at least one entry in the at least one lexical list based on the score of the at least one of the string hypotheses and to assign at least one of the string hypotheses to at least one entry in the at least one lexical list based on the comparing of at least one of the string hypotheses with at least one entry in at least one lexical list and based on the score of the at least one of the string hypotheses.

12. System according to claim 11, wherein the comparing and assigning means is configured to perform comparison and/or assigning only, if a particular condition is fulfilled, in particular, if at least one of the string hypotheses has a score above a predetermined value.

13. System according to claim 11 or 12, wherein the comparing and assigning means is configured to also assign the at least one of the string hypotheses to at least one entry in the at least one lexical list based on a predetermined probability of mistaking the at least one of the string hypotheses with another string hypothesis.

14. System according to one of the claims 11 - 13, wherein the comparing and assigning means is configured to give priority to the score rather than the probability of mistaking the at least one of the string hypotheses with another string hypothesis.

15. System according to one of the claims 11 - 14, wherein the comparing and assigning means is configured to perform comparing and assigning based on a substring of the at least one of the string hypotheses.

16. System according to one of the claims 11 - 15, wherein the recognizing means is configured to determine scores for the string hypotheses on the base of an acoustic model probability and/or a Hidden Markov Model and/or a grammar model probability and or a combination thereof.

17. System according to one of the claims 11 - 16, wherein the processing means is configured to determine at least one characterizing vector comprising the spectral content of the at least one speech signal and/or to determine at least one cepstral vector.

18. Vehicle navigation system comprising the system for speech recognition according to one of the claims 11 - 17.
